# EUROPEAN PATENT SPECIFICATION

(11) **EP 2 748 751 B1**
(45) Date of publication and mention of the grant of the patent: **09.01.2019**
(21) Application number: 12825003.2
(22) Date of filing: 24.08.2012
(51) Int. Cl.: G06F 21/51, G06F 21/52, G06F 21/57, H04L 9/32, H04L 29/06, H04W 4/50

(54) **SYSTEM AND METHOD FOR DAY-ZERO AUTHENTICATION OF ACTIVEX CONTROLS**
SYSTEM UND VERFAHREN ZUR DAY-ZERO AUTHENTIFIZIERUNG VON ACTIVE-X-STEUERUNGEN
SYSTÈME ET PROCÉDÉ D'AUTHENTIFICATION DU JOUR ZÉRO DE CONTRÔLES ACTIVEX

(30) Priority: 24.08.2011 US 201113216388
(43) Date of publication of application: 02.07.2014
(73) Proprietor: McAfee, LLC, Santa Clara, CA 95054 (US)
(72) Inventor: KUMAR, Pawan, Delhi 59 (IN); GUPTA, Rohit, Shimla 172001 (IN); BADOLA, Manoj, Dehradun 1 (IN)
(74) Representative: Goddar, Heinz J.
(86) International application number: PCT/US2012/052282
(87) International publication number: WO 2013/028978

(56) References cited:
- US-A1- 2003 023 770
- US-A1- 2008 115 133
- US-A1- 2008 301 701
- US-A1- 2009 125 986
- US-B1- 6 802 061
- US-B1- 6 802 061

## Description

### TECHNICAL FIELD

This disclosure relates in general to the field of computer networks and, more particularly, to a system and a method for day-zero authentication of ActiveX controls.

### BACKGROUND

The field of computer network administration and support has become increasingly important and complicated in today's society. Computer network environments are configured for virtually every enterprise or organization, typically with multiple interconnected computers (e.g., end user computers, laptops, servers, printing devices, etc.). In many such enterprises, Information Technology (IT) administrators may be tasked with managing and protecting a network environment, including executable software files (e.g., web application files) on hosts, servers, and other network computers. The ability to effectively protect and maintain stable computers and systems without interrupting or hindering legitimate business or personal activities, however, presents a significant obstacle for component manufacturers, system designers, and network operators. This obstacle is made even more complicated due to the continually-evolving array of tactics exploited by malicious operators. In one example, downloadable Microsoft® ActiveX® controls from untrustworthy sources (i.e., known malicious sources or unknown sources) may potentially contain malicious software. (Microsoft and ActiveX are registered trademarks of the Microsoft group of companies.) Nevertheless, users may have a need for accessing updated or new ActiveX controls as soon as they are available, even before such controls have been determined to be trustworthy. Thus, innovative tools are needed to assist IT administrators in the effective control and management of executable software files on computers within computer network environments.

US 6,802,061 B1 discloses an approach for automatically downloading software components from a computer network, which can be used to provide dynamic or interactive multimedia components in HTML documents. The software components may be verified by checking a digital signature of the software component to ensure that the downloaded software component is computer virus and corruption free. After verification, the downloaded software component is installed on a local computer.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a simplified block diagram illustrating components of a system for day-zero authentication of ActiveX controls according to an example embodiment;
FIGURE 2 is a simplified flow-chart illustrating example operational steps associated with an embodiment of the present disclosure;
FIGURE 3 is a simplified flow-chart illustrating additional details associated with embodiments of the present disclosure; and
FIGURE 4 is a simplified flow-chart illustrating example operational steps associated with an embodiment of the present disclosure.

### DETAILED DESCRIPTION OF EXAMPLE EMBODIMENTS

### OVERVIEW

A method in one embodiment includes verifying a digital signature of an ActiveX control, identifying an executable file of the ActiveX control, authorizing the executable file as an updater configured to enable trust propagation, if the digital signature is from an authorized issuer, and installing the ActiveX control. Verifying the digital signature includes checking whether a digital certificate coupled with the digital signature is present in a certificate store and is associated with the authorized issuer, and verifying an integrity of the ActiveX control, for example, by executing a function to return at least a hash of the cabinet file. More specific embodiments include hooking an exported function in the executable file and marking a thread calling the exported function as an updater. Hooking the exported function includes patching the executable function so that when the exported function is called during execution of the executable file, a second function is executed before the exported function is executed. Other embodiments include extracting a cabinet file wrapping the ActiveX control, parsing an information file in the cabinet file, and downloading additional components for installing the ActiveX control.

### EXAMPLE EMBODIMENTS

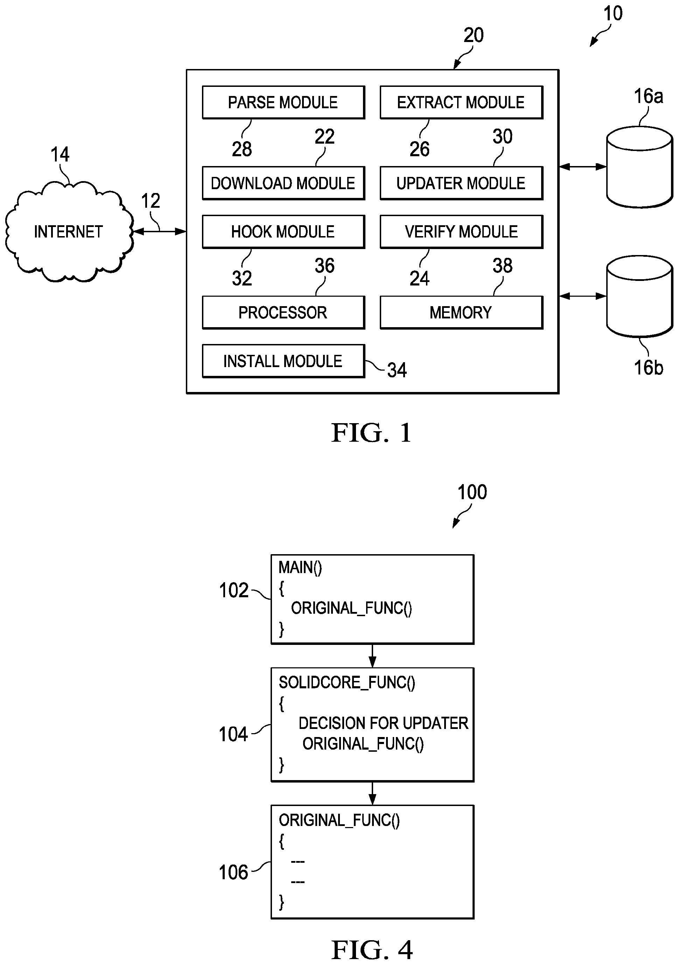

FIGURE 1 is a simplified block diagram illustrating an example implementation of a system 10 for day-zero authentication of downloadable controls. Microsoft® ActiveX® controls are particularly suited to the day-zero authentication activities described in the present disclosure and will be referenced herein accordingly. The exemplary network environment illustrates a computer network 12 comprising an authentication engine 20 connected to an Internet cloud 14 and a database 16a comprising white-listing solutions and a database 16b comprising digital signatures. The digital signatures may be locally created for a particular network (or organization) or globally defined or any suitable combination thereof. Similarly, the white-listing solutions may be local white-listing solutions or global white-listing solutions or any suitable combination thereof. Authentication engine 20 may comprise a download module 22 operable to download files, including ActiveX controls from Internet cloud 14, a verify module 24 operable to verify digital signatures of downloaded files, an extract module 26 operable to extract compressed files in downloaded files, a parse module 28 operable to parse downloaded files, an updater module 30 operable to authorize downloaded files, a hook module 32 operable to hook certain functions in downloaded files, and an install module 34 operable to install ActiveX controls. Authentication engine 20 may also comprise one or more processors 36 and one or more memory elements 38.

As used herein, a "digital certificate" is a set of data that can substantially identify an entity. Digital certificates are typically issued to a requester (e.g., an entity or an individual) by a certificate authority ("CA") after the CA has verified the requester's identity. A digital certificate can contain different types of data, for example, the algorithm used to sign the certificate, the name of the CA that issued the certificate, the name and public key of the requester, and the CA's digital signature. As used herein, a "digital signature" is a mathematical scheme for demonstrating the authenticity of digital data (e.g., a digital message or file), and is designed to assure a recipient that the data was created by a known sender, and that it was not altered in transit. The digital signature is computed using a set of rules or algorithms and a set of parameters such that the identity of the signatory and integrity of the data can be verified. In general, a digital signature algorithm (DSA) may be implemented in software, firmware, hardware, or any combination thereof. A hash function may be used in the signature generation process to obtain a condensed version of data, called a message digest. In general, a hash is a fixed-size result obtained by applying a mathematical function (called a hashing algorithm) to an arbitrary amount of data such that a change to the data changes the hash value. Generating a message with a given hash, modifying a message without changing the hash and finding another message with an identical hash may all be infeasible. Therefore, a hash is usually used in information security applications. The message digest containing the hash is input into the DSA to generate the digital signature. The digital signature is sent to the recipient along with the signed data. The same hash function is also used in the verification process. The DSA authenticates the integrity of the signed data and the identity of the signatory.

In an example embodiment, a file, such as an ActiveX control, may be digitally signed by requesting or purchasing a digital certificate from a CA. The digital certificate may thus be coupled to the digital signature. To digitally sign an ActiveX control, a private cryptographic key may be used. The private cryptographic key may be contained in a digital certificate purchased from a CA (e.g., VeriSign Inc.). The ActiveX control (e.g., CAB file) may be digitally signed using the private cryptographic key contained in the digital certificate. The digital signing process (e.g., SignCode.exe) may generate an object that contains various information, for example, a signed cryptographic digest of the file, identity of the CA used to create the signature, the digital certificate, etc.

According to embodiments of the present disclosure, authentication engine 20 may be configured to provide day-zero authentication of an ActiveX control downloaded from Internet 14 if it is from a trusted source according to its digital signature. In general, ActiveX controls may be wrapped in a cabinet file (e.g., .CAB format), which has been digitally signed by an issuing authority of the cabinet file. As used herein, "cabinet files" or "CAB files" are files that are used to package executable files for delivery, and can include CAB file, ZIP file, and any other similar file comprising a package of one or more executable files. In general, cabinet files are presented in native compressed archive format, supporting compression and digital signing. Usually, CAB files can reserve empty space in the file header for some specific uses like placing digital signatures or arbitrary data. CAB files are also often attached to self-extracting programs where the executable program extracts the attached CAB file. CAB files are also sometimes embedded into other files. In an example scenario, when Adobe® software generates a cabinet file wrapping an ActiveX control, the cabinet file is digitally signed by Adobe Systems, Inc. The ActiveX control may comprise compressed or uncompressed executable files (also referred to herein as 'binaries') in various formats, including executable (*.EXE), dynamic link library (*.DLL), and script formats. Irrespective of the type of executable file contained in the ActiveX control, authentication engine 20 may verify and authorize one or more files downloaded by the ActiveX control and add such authorized files to database 16.

For purposes of illustrating the techniques of system 10, it is important to understand the files, activities and security concerns that may be present in a given network such as network 12 shown in FIGURE 1. The following foundational information may be viewed as a basis from which the present disclosure may be properly explained. Such information is offered earnestly for purposes of explanation only and, accordingly, should not be construed in any way to limit the broad scope of the present disclosure and its potential applications.

Typical network environments, both in organizations (e.g., businesses, schools, government organizations, etc.) and in homes include a plurality of computers such as end user desktops, laptops, servers, network appliances, and the like, with each computer having an installed set of executable software. In large organizations, network environments may include hundreds or thousands of computers, which can span different buildings, cities, and/or geographical areas around the world. IT administrators are often tasked with the extraordinary responsibility of maintaining these computers and their software in a way that minimizes or eliminates disruption to the organization's activities.

One difficulty IT administrators face when managing a network environment is ensuring that only trusted and approved executable software files are present. Although computers in a network may initially be configured with only trusted and approved executable software, continuous efforts (both electronic and manual) are usually necessary to protect against unknown and/or malicious software. For example, traditional anti-virus solutions search databases of malicious software (i.e., blacklists) and prevent any software identified on a blacklist from being executed. Blacklists, however, only contain known threats and, consequently, are ineffective against new malware or targeted attacks. Moreover, malicious users are constantly devising new schemes to penetrate secure networks with malicious software. Once a new piece of malicious software has been created, traditional blacklists will not include such new software until it has been identified as a possible threat, evaluated, and determined to be malicious, often giving the new piece of software time to propagate and spread throughout multiple networks.

Other protection systems include white-listing solutions, which search databases of known trusted software (i.e., white-lists) and only allow software to execute if the software is identified on the white-list. Software program files evaluated and determined to be trustworthy (e.g., uncontaminated, free of malicious code, etc.) may be included in a so-called "whitelist". In example white-list systems, software may be certified as safe and trusted by an authorized individual or entity (e.g., a local administrator, a software security organization or enterprise, etc.). Whitelists may be implemented using checksums where a unique checksum for each program file is stored, which can be readily compared to a computed checksum of a program file sought to be evaluated. A checksum can be a mathematical value or hash sum (e.g., a fixed string of numerical digits) derived by applying an algorithm to a software program file. If the algorithm is applied to a second software program file that is identical to the first software program file, then the checksums should match. However, if the second software program file is different (e.g., it has been altered in some way, it is a different version of the first software program file, it is a wholly different type of software, etc.) then the checksums are very unlikely to match.

Although these systems provide complete protection in preventing unknown and/or malicious software from being executed, such solutions still suffer from several drawbacks. In particular, white-listing solutions can be inflexible, potentially creating delays and disruptions when new software is needed and adding additional steps to administrative workflows. For example, a fresh release of any software or its vulnerability patches will not execute unless they have been added to the white-list. This may result in a major problem because the user may be forced to use existing unsecured software till the vulnerability patch has been white-listed by the white-list administrator.

In particular, when users download ActiveX controls from unknown sources on the Internet, such ActiveX controls may have to be screened to ensure that they are from trusted sources. However, even if the ActiveX control is from a trusted source, it may not be allowed to execute if the ActiveX control file is not in the white-list. Moreover, each binary component created and executed to install the ActiveX control may not be allowed to execute if it is not also identified in the white-list.

ActiveX controls are Component Object Model (COM) compliant binary code components and they can be downloaded and executed in a browser. Generally, ActiveX controls are small programs which are customized for download over the Internet to provide specific functionality on a web-page or its associated content. For example, an ActiveX control may allow a user to quickly add specific functionality to his browser without resorting to an elaborate download-install process. Because ActiveX controls are typically small in size, they may take merely a few seconds to install.

Typically, all versions of Microsoft® Windows® operating systems allow ActiveX controls to execute in IE. For example, when a user visits a web site which has an embedded link to an Adobe® Flash player, and if the player is not already installed on the user's system, IE may prompt the user to download a Flash ActiveX control that can display animation within IE. It is recommended that ActiveX controls be wrapped in a cabinet file (CAB file) containing an information file (INF file) and signed with a private key of the ActiveX control's creator (e.g., Adobe or Macromedia in case of their respective flash players). The private key may be part of the digital signature of the CAB file. The cabinet format provides a way to efficiently package multiple files in a single cabinet; and data compression is performed across file boundaries, significantly improving the compression ratio. Note that the cabinet file as a whole is digitally signed but individual components inside the cabinet file may be unsigned.

When a browser (e.g., Internet Explorer® (IE) browser) comes across an embedded OBJECT tag in a web page (e.g., Hypertext Markup Language (HTML)), the browser downloads and executes the ActiveX controls present at a uniform resource locator (URL) specified in the OBJECT tag. This may present a significant security risk (e.g., the ActiveX control is a malware) and therefore, most security solutions block execution of such ActiveX controls. However, the user may want some of the controls to run, for example, because of their usefulness. The automatic blocking, therefore, presents a problem with white-listing solutions.

White-listing solutions are generally based on a premise that any unknown piece of code is potentially unsafe and thus should not be allowed to execute. Thus, if a user wants to install an ActiveX control or update an already installed ActiveX control on the day of its release (i.e., day-zero), that may not be allowed by the white-list. Continuously keeping abreast of all useful/allowed ActiveX controls, including any updates, and adding the appropriate signatures to a white-list can be a time consuming practice for IT and lead to inefficient use of resources.

One solution that attempts to address such problems is based upon URL white-listing. A domain administrator can add a given URL to a trusted list and then any domain user is allowed to download and install an ActiveX control from that location. However, allowing a URL to be added to a white-list presents a security risk because URLs may be "spoofed." A spoofed URL represents a website that poses as another. For example, a URL may purport to locate www.foo.com, whereas the actual location from where the ActiveX control is downloaded is www.foobar.com, which may contain malicious code or other security risks. Moreover, each ActiveX control needs a corresponding URL to be listed individually.

A system for day-zero authentication of ActiveX controls, outlined by FIGURE 1, can resolve many of these issues. Embodiments of the present disclosure can safely allow freshly released software to be automatically white-listed for execution on computers without involving any manual addition to the white-list by the administrator. Embodiments of the present disclosure can also allow software not listed in the white-list to be added to the white-list automatically if the software is from a trusted source according to its digital signature. Trusted sources may be pre-selected issuers of software and, in one embodiment, may be identified by their digital certificates stored in a certificate repository such as database 16b.

Note that in this Specification, references to various features (e.g., elements, structures, modules, components, steps, operations, characteristics, etc.) included in "one embodiment", "example embodiment", "an embodiment", "another embodiment", "some embodiments", "various embodiments", "other embodiments", "alternative embodiment", and the like are intended to mean that any such features are included in one or more embodiments of the present disclosure, but may or may not necessarily be combined in the same embodiments.

Turning to the infrastructure of FIGURE 1, download module 22 in authentication engine 20 may download a cabinet file from a web site on Internet 14 visited by a user. Verify module 24 can verify the digital signature of the downloaded cabinet file using any suitable method. In an example embodiment, white-list database 16a and digital signature database 16b may be combined into a single database 16. Verify module 24 can verify if the digital certificate of the downloaded CAB file matches or otherwise suitably corresponds to a previously stored certificate in database 16b. Database 16b may be preconfigured with digital certificates corresponding to authorized issuers. Alternatively, or additionally, a user may configure an application control policy to manually add the digital certificate. Determining the certificate and hash of a CAB file can be done by any suitable means, including executing a function to return at least a hash of the cabinet file. For example, Microsoft's MsiGetFileSignatureInformation() function may be executed to return a signer certificate and hash of the cabinet file.

If the cabinet file is verified, extract module 26 can extract the contents of the cabinet file. In an example embodiment, extract module 26 may use cabinet file handling libraries provided by Microsoft as part of Microsoft Cabinet Software Development Kit (cabSDK). The cabinet file may contain an information file (.INF) that provides installation instructions. The INF file is typically a text file that specifies other files that have to be present or downloaded for the ActiveX control to be installed. For example, INF file may specify the files to download, and point to the URLs of such files. Parse module 28 parses the information file and identifies any executable files (e.g., EXE, DLL, and scripts) therein. Updater module 30 may authorize appropriate executable files by marking them as updaters.

As used herein, "updaters" are files with special privileges (i.e., "update privileges") to white-list other executable files and binaries. For example, if EXAMPLEA.DLL is white-listed and made an updater, it can download EXAMPLEB.DLL which may be automatically white-listed and marked an updater, which can then download EXAMPLEC.DLL and so on. In an example embodiment, updater module 30 may use hook module 32 to identify certain exported functions in the executable files and appropriately patch the executable files to authorize a thread calling the exported functions. As used herein, "patching" an executable file refers to updating the file, modifying the file, or running a patch file to update and/or modify the file. In general, a patch file is a text file that consists of a list of differences between an original file and an updated file.

The authorized executable files may be added to the white-listing solution in database 16 automatically by updater module 30. The authorized executable files may download additional components for installing the ActiveX control through download module 22. Such additional components may also be automatically authorized, as appropriate. Because all appropriate components can be downloaded before white-list databases have been updated by authorized administrators or entities, install module 34 may install the ActiveX control.

Not shown in system 10 of FIGURE 1 is hardware that may be suitably coupled to authentication engine 20 in the form of consoles, user interfaces, memory management units (MMU), additional symmetric multiprocessing (SMP) elements, peripheral component interconnect (PCI) bus and corresponding bridges, small computer system interface (SCSI)/integrated drive electronics (IDE) elements, etc. In addition, suitable modems and/or network adapters may also be included for allowing network access by components of system 10. Any suitable operating systems may also be configured in components of system 10 to appropriately manage the operation of hardware components therein. Components of system 10 may include any other suitable hardware, software, components, modules, interfaces, or objects that facilitate the operations thereof. This may be inclusive of appropriate algorithms and communication protocols that facilitate the day-zero authentication of ActiveX control operations detailed herein.

These elements, shown and/or described with reference to system 10 are intended for illustrative purposes and are not meant to imply architectural limitations. In addition, each device may include more or less components where appropriate and based on particular requirements. As used herein in this Specification, the term 'computer' is meant to encompass any personal computers, laptops, network appliances, routers, switches, gateways, processors, servers, load balancers, firewalls, or any other suitable device, component, element, or object operable to affect or process electronic information in a network environment.

System 10 may be adapted to provide day-zero authentication of ActiveX controls related activities for electronic data, which could be resident in memory of a computer or other electronic storage device. Information related to day-zero authentication of ActiveX controls related activities can be suitably rendered, or sent to a specific location, or simply stored or archived (e.g., in database 16a or 16b), and/or properly displayed in any appropriate format.

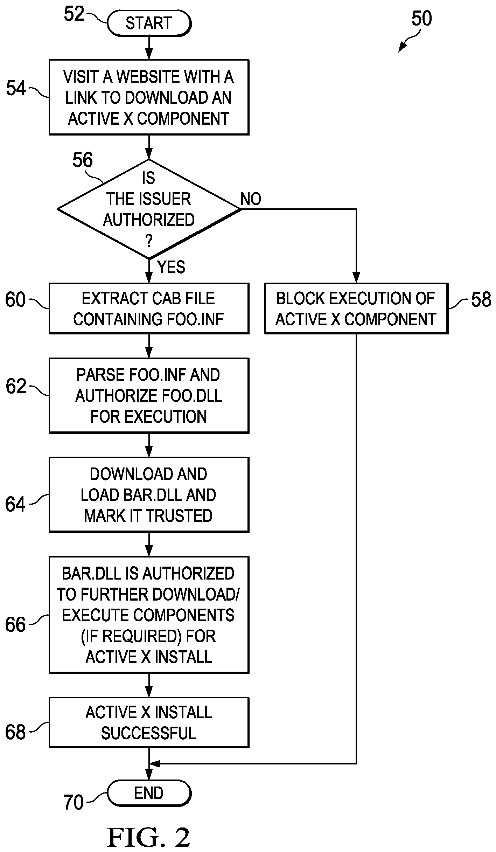

Turning to FIGURE 2, FIGURE 2 is a flow-chart illustrating example operational steps that may be associated with a method 50 according to the present disclosure. Method 50 starts in step 52, when a user activates a browser on a computer. The user may visit a website with a link to download an ActiveX control in step 54. Download module 22 may download the ActiveX control on the computer when a user visits a web page that needs the ActiveX control. The ActiveX control may be in the form of a cabinet file package. In step 56, verify module 24 checks if the issuer is authorized (e.g., verifies the digital signature of the CAB file against previously stored certificates in a trusted certificate store in database 16). A digital certificate may be extracted from the CAB file using any suitable extraction tool. If the digital certificate is found in the trusted certificate store of database 16, then the integrity of the package may also be verified, for example, by using Microsoft's MsiGetFileSignaturelnformation() API. If the issuer is not authorized (e.g., verification fails, certificate is not present in the certificate store), the ActiveX control is blocked from execution in step 58 (e.g., via the existing white-listing solution) and the process terminates in step 70.

If the issuer is authorized (e.g., digital signature of the cabinet file and the integrity of the package are both successfully verified) extract module 26 extracts the cabinet file to a temporary directory in step 60. The cabinet file may contain an INF file, for example, FOO.INF file, which can be identified in the temporary directory. In step 62, parse module 28 parses FOO.INF and can identify all binaries that need to be authorized for execution to successfully install the ActiveX control. Thus, the identified binaries may be white-listed and marked as updaters. In this example scenario, FOO.DLL is identified as a binary that needs such authorization. Updater module 30 may authorize FOO.DLL for execution and configure FOO.DLL to enable "trust propagation." Grant of the trust privilege to other binaries at runtime is termed herein as "trustpropagation."

When any trusted or updater program, FOO.DLL for example, installs new binaries, the new binaries are automatically added to the white-list in database 16 because they have been installed by a trusted program; moreover, the updater program may grant its trust privilege to the new binaries such that they are also marked as updaters, and are also eligible to install any new binaries which can get added to the white-fist as well and become updaters. Thus, the trust privilege may be inherited. FOO.DLL may further download other DLL files and/or EXE files (e.g., EXAMPLEB.DLL and EXAMPLEB.EXE) at runtime, which in turn are configured to further download more binaries (e.g., EXAMPLEC.DLL and EXAMPLEC.EXE). If trust privileges are not propagated from FOO.DLL to EXAMPLEB.EXE/EXAMPLEB.DLL, then EXAMPLEB.EXE/EXAMPLEB.DLL can download EXAMPLEC.EXE/EXAMPLEC.DLL but EXAMPLEB.EXE/EXAMPLEB.DLL may not be allowed to execute EXAMPLEC.EXE/EXAMPLEC.DLL if EXAMPLEB.DLL/EXAMPLEB.EXE are not on the white-list. If EXAMPLEB.EXE/EXAMPLEB.DLL are on the whitelist, then EXAMPLEC .EXE/EXAMPLEC.DLL may still not be executed unless EXAMPLEC.EXE/EXAMPLEC.DLL are also on the white-list.

The table shows a comparison between three different types of programs: (1) normal white-list program; (2) trusted program without trust propagation enabled; and (3) trusted program with trust propagation enabled. In the case of normal white-list program, execution of a new binary or DLL file called by the white-list program is not permitted if the new binary or DLL file is not present in the white-list. Execution of the new binary or DLL file called by a program is permitted if the program is trusted even if the new binary or DLL file is not present in the white-list. Execution of another binary or DLL, which is not present in the white-list, by the new binary, is not permitted even by a trusted program if trust propagation is not enabled. If trust propagation is enabled, the new binary may be marked as trusted and allowed to execute other binaries or DLL files that may not be present in the white-list.

| | **normal white-list program** | **trusted program without trust propagation enabled** | **trusted program with trust propagation enabled** |
|---|---|---|---|
| execution (by program) of new binary or DLL which is not present in the white-list | no | Yes | yes |
| grant trust privilege | no | No | yes |
| execution (by new binary) of binary or DLL which is not present in the white-list | no | No | yes |

In step 64, FOO.DLL, which has been authorized for execution, causes download module 22 to download another DLL file, for example, BAR.DLL. Updater module 30 marks BAR.DLL also as trusted and an updater, because FOO.DLL is configured to enable trust propagation. In step 66, BAR.DLL is authorized to further download and execute additional components (e.g., binaries) as appropriate for installing the ActiveX control. When all appropriate components have downloaded, install module 34 installs the ActiveX control in step 68. The process ends in step 70.

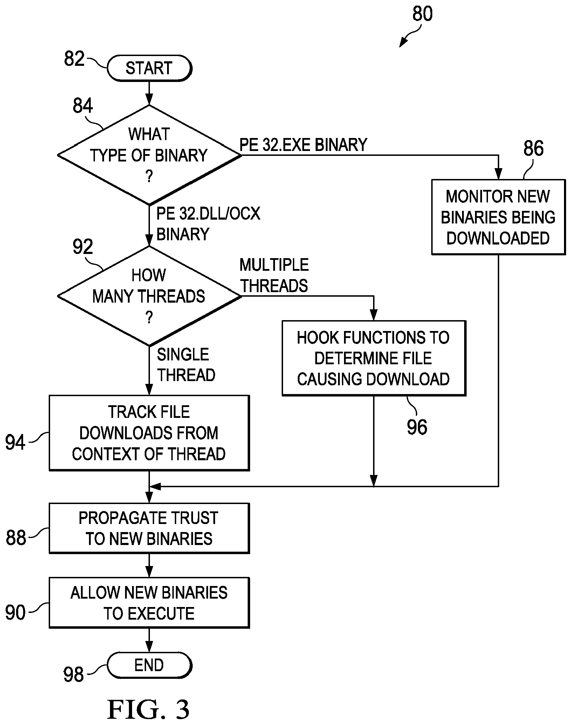

Turning to FIGURE 3, FIGURE 3 is a simplified flow-chart illustrating additional details that may be associated with embodiments according to the present disclosure. Method 80 begins in step 82 when trust propagation is activated. In an example embodiment, a binary file downloaded by download module 22 may be a portable executable 32-bit (PE32) file. In step 84, a determination of the type of binary file is made. If the binary file (e.g., PE32) is in an executable format (e.g., EXE format), new binaries being downloaded and executed by PE32.EXE may be monitored in step 86. In step 88, trust is propagated to the newly downloaded binaries so that they are enabled to download additional binaries during runtime. The new binaries are allowed to execute in step 90.

On the other hand, if the binary file (e.g., PE32) is determined to be a DLL or Object Linking and Embedding Control eXtension (OCX) file, which may load in the context of the browser (e.g., IE) in step 84, a determination about the number of threads that invokes the DLL/OCX file is made in step 92. If the DLL/OCX file can be invoked from only one thread, file-downloads from a context of the thread may be tracked in step 94. On the other hand, if the DLL/OCX file can be invoked from multiple threads, certain functions (e.g., functions related to file creation in the DLL import table) may be hooked to identify the file causing the download in step 96. Thus new files being downloaded by the DLL/OCX file may be tracked and added to the white-list in database 16a. In step 88, trust is propagated to the newly downloaded binaries so that they are enabled to download additional binaries during runtime. The new binaries are allowed to execute in step 90. The process ends in step 98.

In an example embodiment, an ActiveX control may be installed as follows. A browser (e.g., IE) may download the relevant CAB file (e.g., ieatgpc.cab). IE may extract (e.g., unwrap) the CAB file into one or more files, for example, ieatgpc.inf and ieatgpc.dll. IE may parse ieatgpc.inf to find the name of a DLL file to load, for example, ieatgpc.dll. IE may load ieatgpc.dll. The newly loaded file, namely, ieatgpc.dll, may establish a secure connection to a server and download additional DLL files, for example, atgpcdec.dll and atgpcext.dll. Trust may be propagated to atgpcdec.dll and atgpcext.dll to enable them to download and execute additional files. The new DLL files (e.g., ieatgpc.dll, atgpcdec.dll and atgpcext.dll) may then download additional binaries (e.g., more than 40 DLL files and EXE files) and execute them to complete installation of the ActiveX control.

Turning to FIGURE 4, FIGURE 4 is a simplified flow-chart illustrating example operational steps in a method 100 according to the present disclosure. Updater module 30 can mark an executable file (e.g., EXE, DLL and scripts) as an updater, with special privileges to download files and mark any relevant downloaded files as updaters. In general, when a file is being downloaded and/or created by a process, the operating system (e.g., of the computer performing the download) can identify the process performing the download. However, the operating system may not be able to identify the actual file (e.g., DLL file) that performs the download in the process, because the process may call multiple files during execution, one of which performs the download.

In case of ActiveX controls, the browser (e.g., Internet Explorer (IE)) is the process that downloads and executes the ActiveX control, but an executable called by IE may be the actual file causing the download. To permit download and execution of the ActiveX control, a program causing the download (other than IE) may have to be identified and marked as an updater. For example, if IE is marked as an updater, then the ActiveX control may also be white-listed and allowed to execute. However, if IE is made an updater, any (and potentially all) files downloaded from the Internet may also be allowed to execute and made updaters, potentially creating a security risk. Therefore, in accordance with the present disclosure, updater module 30 can selectively allow execution of trusted ActiveX controls that have a verified digital signature, by identifying the appropriate executable file to be made an updater.

Executable files with a .EXE extension are generally executed outside the browser's process context. Therefore, files with .EXE extensions may be marked as updaters by updater module 30 without causing the browser itself to become an updater. However, files in DLL format generally load in the context of a browser's process and therefore cannot be made updaters indiscriminately. Not all DLL files may perform download actions, and therefore, may not be indiscriminately marked as updaters. Typically, files in DLL format install ActiveX controls in a single-thread context. A thread of execution is a smallest unit of processing that can be scheduled by an operating system. Multiple threads can exist within the same process and share resources, such as memory. Updater module 30 can identify the single thread causing the ActiveX control download, and make the thread an updater for a specific time window during which the DLL installs the trusted ActiveX control.

In FIGURE 4, updater module 30 hooks one or more exported functions (e.g., Original_Func()) of the DLL files (e.g., files to be made updaters) such that, at run-time, when a DLL file is loaded, updater module 30 obtains control at specific points in the execution and can mark the thread in which these exported functions are called as an updater. As used herein, "exported functions" are functions that a module in a DLL file exposes to other modules and/or other files. A DLL file contains an exports table listing the name of every function (i.e., exported function) that the DLL file exports to other executables. These functions are the entry points into the DLL file; only the functions in the exports table can be accessed by other executables. Any other functions in the DLL file are private to the DLL file. For example, an exports table in a DLL file may contain a Createfite() function, which may be called by the DLL file and by other files accessing the DLL file. When the DLL file is unloaded, updater module 30 may revoke the updater privilege from the thread.

As used herein, the term "hooking" covers a range of techniques used to alter or augment the behavior of software components (e.g., executable files) by intercepting function calls or messages or events passed between software components. For example, an entry point of an exported function within a module can be found and the module can then be altered to instead dynamically load some other library module and then execute desired functions within that loaded library. In an alternate embodiment, function calls may be intercepted through a wrapper library. A wrapper may contain a separate but similar version of a library that an application loads, with substantially similar functionality of the original library that it will replace. This wrapper library can be designed to call any of the functionality from the original library, or replace it with an entirely new set of logic.

According to the embodiment shown in FIGURE 4, in step 102, updater module 30 identifies Original_Func() of the DLL files as an exported function to be hooked. For example, Original_Func() may be a CreateFile() function called by Example.DLL. In step 104, updater module 30 uses hook module 32 to patch the DLL file so that when Original_Func() is called by the program (e.g., IE executing the DLL file), a hook function (e.g., Solidcore_Func()) is called instead. For example, updater module 30 may patch the Example.DLL file by changing the location of a function pointer to Sotidcore_Func() instead of CreateFile(). Within Solidcore_Func(), decision making steps may be executed before calling Original_Func(). For example, when Solidcore_Func() is called, updater module 30 identifies Example.DLL as the file calling the function. In step 106, Original_Func() is called and executed. Thus, updater module 30 identifies and marks Example.DLL as an updater, permitting Example.DLL to download and execute additional components as appropriate for downloading the ActiveX control.

The example network environment in the FIGURES may be configured as one or more networks in any form including, but not limited to, local area networks (LANs), wireless local area networks (WLANs), metropolitan area networks (MANs), wide area networks (WANs), virtual private networks (VPNs), Intranet, Extranet, any other appropriate architecture or system, or any combination thereof that facilitates communications in a network. In some embodiments, communication links connecting components of system 10 may represent any electronic link supporting a LAN environment such as, for example, cable, Ethernet, wireless technologies (e.g., IEEE 802.11x), ATM, fiber optics, etc. or any suitable combination thereof.

In other embodiments, communication links in system 10 may represent a remote connection, for example, to Internet 14, through any appropriate medium (e.g., digital subscriber lines (DSL), telephone lines, T1 lines, T3 lines, wireless, satellite, fiber optics, cable, Ethernet, etc. or any combination thereof) and/or through any additional networks such as a wide area networks (e.g., the Internet). In addition, gateways, routers, switches, and any other suitable network elements may be used to facilitate electronic communication between devices on network 12. Note that network 12 illustrated in FIGURE 1 may include a configuration capable of transmission control protocol/internet protocol (TCP/IP) communications for the transmission and/or reception of packets in the network. Network 12 could also operate in conjunction with a user datagram protocol/IP (UDP/IP) or any other suitable protocol, where appropriate and based on particular needs.

In an example embodiment, authentication engine 20 may reside on end user computers that could be operated by end users. The end user computers may include desktops, laptops, and mobile or handheld computers (e.g., personal digital assistants (PDAs), iPads, gaming consoles, mobile phones, etc.), or any other type of computing device operable by an end user. It should be noted that the network configurations and interconnections shown and described herein are for illustrative purposes only. FIGURE 1 is intended as an example and should not be construed to imply architectural limitations in the present disclosure.

System 10 may be implemented to provide various options for performing actions for day-zero authentication of ActiveX controls. Such options may include, generally, blocking or allowing execution of files on the various modules. Such blocking or allowing may be accomplished by, for example, blocking execution of a file, adding a file to a white-list, adding a file to a black-list, moving, replacing, renaming, or quarantining a file, changing a network configuration of hosts containing files to block certain network traffic, starting or stopping processes of hosts containing files modifying the software configuration of hosts containing files, and opening a change request using a change ticketing system. To achieve these management and remediation actions, system 10 may be suitably integrated with various existing security technologies such as, for example, McAfee® Anti-Virus software, McAfee® HIPS software, McAfee® Application Control white-listing software, or any other appropriate security software.

The options for day-zero authentication of ActiveX controls, as shown in FIGURES, are for example purposes only. It will be appreciated that numerous other options, at least some of which are detailed herein in this Specification, may be provided in any combination with or exclusive of the options of the various FIGURES.

Software and other electronic data for achieving the day-zero authentication of ActiveX control operations outlined herein can be provided at various locations (e.g., the corporate IT headquarters, end user computers, distributed servers in the cloud, etc.). In some embodiments, this software could be received or downloaded from a web server (e.g., in the context of purchasing individual end-user licenses for separate networks, devices, servers, etc.) in order to provide this system for day-zero authentication for ActiveX controls. In one example implementation, this software is resident in one or more computers and/or web hosts sought to be protected from a security attack (or protected from unwanted or unauthorized manipulations of data).

In various embodiments, the software of the system for day-zero authentication of ActiveX controls in a computer network environment could involve a proprietary element (*e*.*g*., as part of a network security solution with McAfee® ePolicy Orchestrator (ePO) software, McAfee® Anti-Virus software, McAfee® HIPS software, McAfee® Application Control software, etc.), which could be provided in (or be proximate to) these identified elements, or be provided in any other device, server, network appliance, console, firewall, switch, information technology (IT) device, distributed server, etc., or be provided as a complementary solution, or otherwise provisioned in the network.

In certain example implementations, the day-zero authentication of ActiveX controls related activities outlined herein may be implemented in software. This could be inclusive of software provided in authentication engine 20 and in other network elements. These elements and/or modules can cooperate with each other in order to perform the day-zero authentication of ActiveX controls related activities as discussed herein. In other embodiments, these features may be provided external to these elements, included in other devices to achieve these intended functionalities, or consolidated in any appropriate manner. For example, some of the processors associated with the various elements may be removed, or otherwise consolidated such that a single processor and a single memory location are responsible for certain activities. In a general sense, the arrangement depicted in FIGURES may be more logical in its representation, whereas a physical architecture may include various permutations, combinations, and/or hybrids of these elements.

In various embodiments, some or all of these elements include software (or reciprocating software) that can coordinate, manage, or otherwise cooperate in order to achieve the day-zero authentication of ActiveX control operations, as outlined herein. One or more of these elements may include any suitable algorithms, hardware, software, components, modules, interfaces, or objects that facilitate the operations thereof. In the implementation involving software, such a configuration may be inclusive of logic encoded in one or more tangible media, which may be inclusive of non-transitory media (e.g., embedded logic provided in an application specific integrated circuit (ASIC), digital signal processor (DSP) instructions, software (potentially inclusive of object code and source code) to be executed by a processor, or other similar machine, etc.).

In some of these instances, one or more memory elements (e.g., memory 38) can store data used for the operations described herein. This includes the memory element being able to store software, logic, code, or processor instructions that are executed to carry out the activities described in this Specification. A processor can execute any type of instructions associated with the data to achieve the operations detailed herein in this Specification. In one example, processor 36 could transform an element or an article (e.g., data) from one state or thing to another state or thing. In another example, the activities outlined herein may be implemented with fixed logic or programmable logic (*e*.*g*., software/computer instructions executed by a processor) and the elements identified herein could be some type of a programmable processor, programmable digital logic (*e*.*g*., a field programmable gate array (FPGA), an erasable programmable read only memory (EPROM), an electrically erasable programmable read only memory (EEPROM)), an ASIC that includes digital logic, software, code, electronic instructions, flash memory, optical disks, CD-ROMs, DVD ROMs, magnetic or optical cards, other types of machine-readable mediums suitable for storing electronic instructions, or any suitable combination thereof.

Authentication engine 20 and other associated components in system 10 can include one or more memory elements (e.g., memory 38, databases 16a and 16b) for storing information to be used in achieving operations associated with the application assessment as outlined herein. These devices may further keep information in any suitable type of memory element (e.g., random access memory (RAM), read only memory (ROM), field programmable gate array (FPGA), erasable programmable read only memory (EPROM), electrically erasable programmable ROM (EEPROM), etc.), software, hardware, or in any other suitable component, device, element, or object where appropriate and based on particular needs. The information being tracked, sent, received, or stored in system 10 could be provided in any database, register, table, cache, queue, control list, or storage structure, based on particular needs and implementations, all of which could be referenced in any suitable timeframe. Any of the memory items discussed herein should be construed as being encompassed within the broad term 'memory element.' Similarly, any of the potential processing elements, modules, and machines described in this Specification should be construed as being encompassed within the broad term 'processor.' Each of the computers may also include suitable interfaces for receiving, transmitting, and/or otherwise communicating data or information in a network environment.

Note that with the numerous examples provided herein, interaction may be described in terms of two, three, four, or more network elements. However, this has been done for purposes of clarity and example only. It should be appreciated that the system can be consolidated in any suitable manner. Along similar design alternatives, any of the illustrated computers, modules, components, and elements of FIGURES may be combined in various possible configurations, all of which are clearly within the broad scope of this Specification. In certain cases, it may be easier to describe one or more of the functionalities of a given set of flows by only referencing a limited number of network elements. It should be appreciated that the system of FIGURES (and corresponding teachings) is readily scalable and can accommodate a large number of components, as well as more complicated/sophisticated arrangements and configurations. Accordingly, the examples provided should not limit the scope or inhibit the broad teachings of system 10 as potentially applied to a myriad of other architectures.

It is also important to note that the operations described with reference to the preceding FIGURES illustrate only some of the possible scenarios that may be executed by, or within, the system. Some of these operations may be deleted or removed where appropriate, or these steps may be modified or changed considerably without departing from the scope of the invention which is defined by the appended claims. In addition, the timing of these operations may be altered considerably and still achieve the results taught in this disclosure. The preceding operational flows have been offered for purposes of example and discussion. Substantial flexibility is provided by the system in that any suitable arrangements, chronologies, configurations, and timing mechanisms may be provided without departing from the scope of the invention which is defined by the appended claims.

## Claims

1. A computer implemented method comprising:
verifying (56) a digital signature of an ActiveX control; and
identifying (62) at least one executable file of the ActiveX control;
authorizing the at least one executable file for execution by white-listing the at least one executable file and authorizing the at least one executable file as an updater by marking the at least one executable file as an updater if the digital signature is from an authorized issuer, wherein an updater is a file with privileges to white-list other executable files; and
installing the ActiveX control.

2. The method of Claim 1, wherein the authorizing the at least one executable file as an updater comprises:
hooking at least one exported function in the at least one executable file;
providing update privileges to a thread calling the at least one exported function; and
preferably, revoking update privileges from the thread when the at least one executable file is unloaded.

3. The method of Claim 2, wherein the hooking comprises patching the at least one executable file so that when the at least one exported function is called during execution of the at least one executable file, a second function is executed before the at least one exported function is executed.

4. The method of any of Claims 1-3, wherein the ActiveX control is wrapped in a cabinet file, and the method preferably comprises extracting the cabinet file.

5. The method of Claim 4, wherein the cabinet file comprises an information file.

6. The method of Claim 5, further comprising
parsing the information file.

7. The method of any of the preceding claims, further comprising
downloading additional components for installing the ActiveX control.

8. The method of any of the preceding claims, further comprising
blocking execution of the Active X control if the digital signature is not from an authorized issuer.

9. The method of any of the preceding claims, wherein the at least one executable file is selected from a group comprising files in EXE, DLL and script formats.

10. The method of any of the preceding claims, wherein the verifying a digital signature comprises:
checking whether a digital certificate coupled with the digital signature is present in a certificate store and is associated with the authorized issuer; and
verifying an integrity of the ActiveX control, comprising executing a function to return at least a hash of the cabinet file.

11. An apparatus comprising a memory element and a processor configured for performing the method of any of the preceding claims.

12. The apparatus of Claim 11, wherein the memory element comprises machine-readable instructions that, when executed, cause the apparatus to perform the method.

13. The apparatus of any of Claims 11-12, wherein the apparatus is a computing system.

14. At least one computer readable medium comprising instructions that, when executed, implement a method as claimed in one of the claims 1 to 10.

## Patentansprüche

1. Computerimplementiertes Verfahren, das folgende Schritte umfasst:
Verifizieren (56) einer digitalen Signatur eines ActiveX-Steuerelements; und
Identifizieren (62) mindestens einer ausführbaren Datei des ActiveX-Steuerelements;
Autorisieren der mindestens einen ausführbaren Datei zur Ausführung durch Whitelist-Auflisten der mindestens einen ausführbaren Datei und Autorisieren der mindestens einen ausführbaren Datei als Updater durch Markieren der mindestens einen ausführbaren Datei als Updater, wenn die digitale Signatur von einem autorisierten Herausgeber stammt, wobei ein Updater eine Datei mit Rechten zum Whitelist-Auflisten weiterer ausführbarer Dateien ist; und
Installieren des ActiveX-Steuerelements.

2. Verfahren nach Anspruch 1, wobei das Autorisieren der mindestens einen ausführbaren Datei als Updater folgende Schritte umfasst:
Einhängen von mindestens einer exportierten Funktion in die mindestens eine ausführbare Datei;
Bereitstellen von Update-Rechten für einen Thread, der die mindestens eine exportierte Funktion aufruft; und
vorzugsweises Entziehen von Update-Rechten von dem Thread, wenn die mindestens eine ausführbare Datei entladen wird.

3. Verfahren nach Anspruch 2, wobei das Einhängen ein Patchen der mindestens einen ausführbaren Datei umfasst, so dass, wenn die mindestens eine exportierte Funktion während der Ausführung der mindestens einen ausführbaren Datei aufgerufen wird, eine zweite Funktion ausgeführt wird, bevor die mindestens eine exportierte Funktion ausgeführt wird.

4. Verfahren nach einem der Ansprüche 1-3, wobei das ActiveX-Steuerelement in eine Cabinet-Datei eingebettet ist und das Verfahren vorzugsweise ein Extrahieren der Cabinet-Datei umfasst.

5. Verfahren nach Anspruch 4, wobei die Cabinet-Datei eine Informationsdatei umfasst.

6. Verfahren nach Anspruch 5, das ferner ein Parsen der Informationsdatei umfasst.

7. Verfahren nach einem der vorhergehenden Ansprüche, das ferner ein Herunterladen von zusätzlichen Komponenten zum Installieren des ActiveX-Steuerelements umfasst.

8. Verfahren nach einem der vorhergehenden Ansprüche, das ferner ein Blockieren der Ausführung des Active-X-Steuerelements umfasst, wenn die digitale Signatur nicht von einem autorisierten Herausgeber stammt.

9. Verfahren nach einem der vorhergehenden Ansprüche, wobei die mindestens eine ausführbare Datei aus einer Gruppe ausgewählt ist, die Dateien in EXE-, DLL- und Skriptformaten umfasst.

10. Verfahren nach einem der vorhergehenden Ansprüche, wobei das Verifizieren einer digitalen Signatur folgende Schritte umfasst:
Prüfen, ob ein mit der digitalen Signatur gekoppeltes digitales Zertifikat in einem Zertifikatsspeicher vorhanden und dem autorisierten Herausgeber zugeordnet ist; und
Verifizieren einer Integrität des ActiveX-Steuerelements, umfassend Ausführen einer Funktion, um mindestens einen Hash der Cabinet-Datei zurückzugeben.

11. Vorrichtung, die ein Speicherelement und einen Prozessor umfasst, der eingerichtet ist, das Verfahren nach einem der vorhergehenden Ansprüche durchzuführen.

12. Vorrichtung nach Anspruch 11, wobei das Speicherelement maschinenlesbare Befehle umfasst, die bei Ausführung die Vorrichtung veranlassen, das Verfahren durchzuführen.

13. Vorrichtung nach einem der Ansprüche 11-12, wobei die Vorrichtung ein Rechensystem ist.

14. Mindestens ein computerlesbares Medium, das Befehle umfasst, die, wenn sie ausgeführt werden, ein Verfahren nach einem der Ansprüche 1 bis 10 implementieren.

## Revendications

1. Procédé mis en oeuvre par ordinateur comprenant les étapes ci-dessous consistant à :
vérifier (56) une signature numérique d'un contrôle ActiveX ; et
identifier (62) au moins un fichier exécutable du contrôle ActiveX ;
autoriser l'exécution dudit au moins un fichier exécutable en mettant en liste blanche ledit au moins un fichier exécutable, et autoriser ledit au moins un fichier exécutable en tant que fichier de mise à jour en marquant ledit au moins un fichier exécutable en tant que fichier de mise à jour si la signature numérique provient d'un émetteur autorisé, dans lequel un fichier de mise à jour est un fichier disposant de privilèges pour mettre d'autres fichiers exécutables en liste blanche ; et
installer le contrôle ActiveX.

2. Procédé selon la revendication 1, dans lequel l'étape d'autorisation dudit au moins un fichier exécutable en tant qu'un fichier de mise à jour comprend les étapes ci-dessous consistant à :
accrocher au moins une fonction exportée dans ledit au moins un fichier exécutable ;
fournir des privilèges de mise à jour à un fil d'exécution appelant ladite au moins une fonction exportée ; et
de préférence, révoquer des privilèges de mise à jour provenant du fil d'exécution lorsque ledit au moins un fichier exécutable est déchargé.

3. Procédé selon la revendication 2, dans lequel l'étape d'accrochage comprend l'étape consistant à retoucher ledit au moins un fichier exécutable de sorte que, lorsque ladite au moins une fonction exportée est appelée au cours de l'exécution dudit au moins un fichier exécutable, une seconde fonction est exécutée avant que ladite au moins une fonction exportée ne soit exécutée.

4. Procédé selon l'une quelconque des revendications 1 à 3, dans lequel le contrôle ActiveX est enveloppé dans un fichier « CAB », et le procédé comprend de préférence l'étape consistant à extraire le fichier « CAB ».

5. Procédé selon la revendication 4, dans lequel le fichier « CAB » comprend un fichier d'informations.

6. Procédé selon la revendication 5, comprenant en outre l'étape consistant à analyser le fichier d'informations.

7. Procédé selon l'une quelconque des revendications précédentes, comprenant en outre l'étape consistant à télécharger des composants supplémentaires pour installer le contrôle ActiveX.

8. Procédé selon l'une quelconque des revendications précédentes, comprenant en outre l'étape consistant à bloquer l'exécution du contrôle ActiveX si la signature numérique ne provient pas d'un émetteur autorisé.

9. Procédé selon l'une quelconque des revendications précédentes, dans lequel ledit au moins un fichier exécutable est sélectionné à partir d'un groupe comprenant des fichiers aux formats « EXE », « DLL » et « script ».

10. Procédé selon l'une quelconque des revendications précédentes, dans lequel l'étape de vérification d'une signature numérique comprend les étapes ci-dessous consistant à :
vérifier si un certificat numérique couplé à la signature numérique est présent dans un magasin de certificats et est associé à l'émetteur autorisé ; et
vérifier une intégrité du contrôle ActiveX, et notamment exécuter une fonction pour renvoyer au moins un hachage du fichier « CAB ».

11. Appareil comprenant un élément de mémoire et un processeur, lequel est configuré de manière à mettre en oeuvre le procédé selon l'une quelconque des revendications précédentes.

12. Appareil selon la revendication 11, dans lequel l'élément de mémoire comprend des instructions lisibles par machine qui, lorsqu'elles sont exécutées, amènent l'appareil à mettre en oeuvre le procédé.

13. Appareil selon l'une quelconque des revendications 11 à 12, dans lequel l'appareil est un système informatique.

14. Au moins un support lisible par ordinateur comprenant des instructions qui, lorsqu'elles sont exécutées, mettent en oeuvre un procédé selon l'une quelconque des revendications 1 à 10.
